# EUROPÄISCHE PATENTSCHRIFT

(11) **EP 2 871 418 B1**
(45) Veröffentlichungstag und Bekanntmachung des Hinweises auf die Patenterteilung: **21.10.2015**
(21) Anmeldenummer: 14191942.3
(22) Anmeldetag: 05.11.2014
(51) Int. Cl.: F23R 3/00

(54) **Gasturbinenbrennkammer sowie Verfahren zu deren Herstellung**
Gas turbine combustion chamber and method for its manufacture
Chambre de combustion d'une turbine à gaz et son procédé de fabrication

(30) Priorität: 11.11.2013 DE 102013222863
(43) Veröffentlichungstag der Anmeldung: 13.05.2015
(73) Patentinhaber: Rolls-Royce Deutschland Ltd & Co KG, 15827 Blankenfelde-Mahlow (DE)
(72) Erfinder: Clemen, Dr.-Ing. Carsten, 15749 Mittenwalde (DE); Gerendás, Dr.-Ing. Miklós, 15838 Am Mellensee (DE); Ebel, Michael, 15834 Rangsdorf (DE); Penz, Stefan, 16356 Werneuchen (DE)
(74) Vertreter: Hoefer & Partner Patentanwälte mbB

(56) Entgegenhaltungen:
- EP-A1- 2 426 338
- EP-A2- 2 554 903
- US-A1- 2010 011 775

## Beschreibung

Aus dem Stand der Technik sind unterschiedlichste Ausgestaltungen von Gasturbinenbrennkammern bekannt, die jedoch insgesamt nach einem gleichen Grundprinzip aufgebaut sind. Dabei ist eine Brennkammeraußenwand vorgesehen, welche aus einem umgeformten Metallblech gefertigt ist. In diese äußere Brennkammerwand sind Prallkühllöcher eingebracht, üblicherweise mittels eines Bohrverfahrens. An der äußeren Brennkammerwand sind Schindeln befestigt, die mittels Bolzen und Schrauben fixiert sind. In gleicher Weise ist eine innere Brennkammerwand ausgebildet. Zur Aufhängung der Brennkammer dienen Flansche, welche mit einer Brennkammeraufhängung verbunden sind. Diese Teile sind beispielsweise als separate Schmiedeteile hergestellt und mit der äußeren bzw. der inneren Brennkammerwand verschweißt. Auch ein Brennkammerkopf, eine Kopfplatte sowie ein Hitzeschild sind jeweils als separate Bauteile hergestellt, meist als Gussteile. Die benötigten Kühllöcher im Hitzeschild werden ebenso mittels eines Bohrverfahrens hergestellt, wie Luftzuführlöcher in der Kopfplatte. Das Brennkammergehäuse wird mit dem Hitzeschild und dem Brennkammerkopf sowie der Kopfplatte verbunden, teils mittels Schraubverbindungen, teils durch Verschweißen.

Es ergibt sich, dass die aus dem Stand der Technik bekannte Herstellungsweise eine sehr große Anzahl von Einzelteilen benötigt und einen sehr großen Aufwand für die Fertigung mit sich bringt. Es sind insbesondere für die vielen Bauteile viele unterschiedliche Fertigungsverfahren erforderlich, welche viele Fertigungsschritte benötigen. Hierdurch ergibt sich weiterhin der Nachteil, dass sich Ungenauigkeiten und Maßabweichungen in der Fertigung summieren. Auch durch die Notwendigkeit, eine Vielzahl von Kühlluftlöchern in der Brennkammerwand und den Schindeln auszubilden, ergibt sich ein hoher zusätzlicher Fertigungsaufwand. All dies führt auch zu sehr hohen Kosten bei der Herstellung einer Gasturbinenbrennkammer.

Aus der EP 2 554 903 A2 ist ein Aufbau einer Brennkammerwand vorbekannt, bei welchem einzelne Segmente jeweils einen Teil einer inneren Brennkammerwand und einen Teil einer äußeren Brennkammerwand bilden. Die Segmente sind mittels eines Laserauftragsschmelzverfahrens ausgebildet.

Die US 2010/011775 A1 beschreibt eine doppelwandige Brennkammerwand, bei welcher einzelne Schindeln an einer äußeren Brennkammerwand befestigt sind. Die Schindeln sind mittels eines Laserauftragsschmelzverfahrens ausgebildet.

Eine weitere Brennkammerkonstruktion ist aus der EP 2 426 338 A1 bekannt. Dabei sind äußere und innere Platten sandwichartig zu einer einstückigen Brennkammerwand miteinander verbunden.

Der Erfindung liegt die Aufgabe zugrunde, eine Gasturbinenbrennkammer sowie ein Verfahren zu deren Herstellung zu schaffen, welche bei einfachem Aufbau und einfacher Anwendbarkeit den erforderlichen Fertigungsaufwand reduzieren, die Präzision der Herstellung der Brennkammer erhöhen und zu einer deutlichen Kostensenkung führen.

Erfindungsgemäß wird die Aufgabe gelöst durch eine Gasturbinenbrennkammer mit einer Kopfplatte sowie mit einer äußeren und einer inneren Brennkammerwand, wobei diese einwandig oder doppelwandig, d. h. mit in die Brennkammerwand integrierter Funktion der Schindel, ausgeführt sein kann, welche einstückig mittels eines DLD-Verfahrens ausgebildet ist. Entsprechend ist hinsichtlich des Verfahrens zur Herstellung der Brennkammer vorgesehen, dass diese zumindest mit der Kopfplatte und der äußeren und der inneren Brennkammerwand einstückig mittels des DLD-Verfahrens (direct laser deposition, Laserauftragsschmelzverfahren) hergestellt wird.

In besonders günstiger Ausgestaltung der Erfindung ist dabei vorgesehen, dass die Brennkammer einen U-förmigen Querschnitt aufweist und entweder einstückig mittels des DLD-Verfahrens hergestellt wird oder aus einzelnen, einen U-förmigen Querschnitt aufweisenden, miteinander verschweißten Segmenten zusammengesetzt ist, welche jeweils mittels des DLD-Verfahrens hergestellt sind. Dabei umfassen die Segmente sinnvollerweise mindestens einen Brennkammersektor, können sich aber auch über mehrere Sektoren erstrecken, wobei als Brennkammersektor die sich wiederholende Teilung auf der Basis der Kraftstoffdüsen definiert ist.

Bei dem erfindungsgemäß zu verwendenden DLD-Verfahren wird ein üblicherweise aus metallischen Komponenten bestehendes pulverartiges Grundmaterial mittels eines Lasers oder Elektronenstrahls schichtweise aufgeschmolzen, so dass ein dreidimensionales Werkstück erzeugt wird, welches eine hohe Präzision aufweist und nicht oder nur noch unwesentlich nachbearbeitet werden muss. Mittels des DLD-Verfahrens ist es insbesondere möglich, hochkomplexe Geometrien mit Ausnehmungen, Hohlräumen und/oder Hinterschneidungen zu erzeugen, so wie dies durch eine konventionelle Fertigung nicht oder nur sehr eingeschränkt möglich wäre.

In besonders günstiger Weiterbildung der Erfindung ist vorgesehen, dass zumindest ein Brennkammerflansch und/oder eine Brennkammeraufhängung einstückig mit der Brennkammer mittels des DLD-Verfahrens hergestellt werden. Dabei kann es günstig sein, den Brennkammerflansch und/oder die Brennkammeraufhängung mit einem Aufmaß herzustellen und nachfolgend passend an die Einbausituation fertig zu bearbeiten.

Bei einem Aufbau der erfindungsgemäßen Gasturbinenbrennkammer aus einzelnen, mit einem U-förmigen Querschnitt versehenen Segmenten kann es vorteilhaft sein, wenn an den Fügebereichen der Segmente stegartige Bereiche ausgebildet sind, welche ein Zusatz-Werkstoffvolumen für den nachfolgenden Schweißvorgang bilden. Somit ist es beim Fügen der einzelnen Segmente nicht erforderlich, Zusatzwerkstoff einzubringen. Dies führt zu einer wesentlichen Vereinfachung des Schweißverfahrens.

Die Fügestellen können dabei in einer Ebene liegen, was fertigungstechnisch vorteilhaft ist, es ist aber auch denkbar, die Trennstellen der Sektoren den traditionellen Gestaltungsregeln für Schindeln folgen zu lassen, die keine Trennstellen durch Mischlöcher vorsehen. Die sich ergebenden Fügelinien stellen eine mehr oder weniger in Umfangsrichtung gebogene Line dar, die auf der Ober- und Unterseite gegenläufig sein kann.

Erfindungsgemäß sind auch Kühlluftlöcher, Löcher für Befestigungspunkte, Zumischlöcher, Löcher für Zündkerzen und/oder Löcher für Sensoren oder ähnliches, mittels des DLD-Verfahrens hergestellt. Weitere, zusätzliche Bearbeitungsschritte können somit gänzlich entfallen. Weiterhin ist es möglich, die einzelnen Löcher oder Ausnehmungen mit beliebigen Querschnitten und in beliebiger Orientierung zu erzeugen. Dies ermöglicht gestalterische Maßnahmen, die mittels konventioneller Fertigungsverfahren nicht oder nur bedingt realisierbar wären.

In günstiger Weiterbildung der erfindungsgemäßen Gasturbinenbrennkammer ist es möglich, einen Brennkammerkopf entweder als Vollring auszubilden und mit der Gasturbinenbrennkammer zu verbinden oder den Brennkammerkopf segmentiert herzustellen. Die mittels des DLD-Verfahrens hergestellte Kopfplatte ist bevorzugterweise mit formschlüssigen Positioniermitteln (Anschlagflächen, Federflächen und ähnlichem) versehen, um eine exakte Positionierung des Brennkammerkopfes zu gewährleisten.

Im Folgenden wird die Erfindung anhand von Ausführungsbeispielen in Verbindung mit der Zeichnung beschrieben. Dabei zeigt:
- Fig. 1: ein Gasturbinentriebwerk zur Verwendung der erfindungsgemäßen Gasturbinenbrennkammer,
- Fig. 2: eine vergrößerte schematisierte Detail-Schnittansicht einer Brennkammer gemäß dem Stand der Technik,
- Fig. 3: eine Ansicht, analog Fig. 2, eines Ausführungsbeispiels der erfindungsgemäßen Brennkammer,
- Fig. 4, 5: eine Frontansicht und eine Seitenansicht eines erfindungsgemäßen Brennkammersegments,
- Fig. 6-8: Darstellungen der Fügebereiche von erfindungsgemäßen Brennkammersegmenten,
- Fig. 9: eine Frontansicht sowie zwei Seitenansichten eines erfindungsgemäßen Hitzeschildes,
- Fig. 10: eine vergrößerte Teil-Schnittansicht der Anbindung eines Brennkammerkopfes an einem Ausführungsbeispiel der erfindungsgemäßen Brennkammer, und
- Fig. 11: eine Darstellung des Fügebereichs von Brennkammersegmenten.

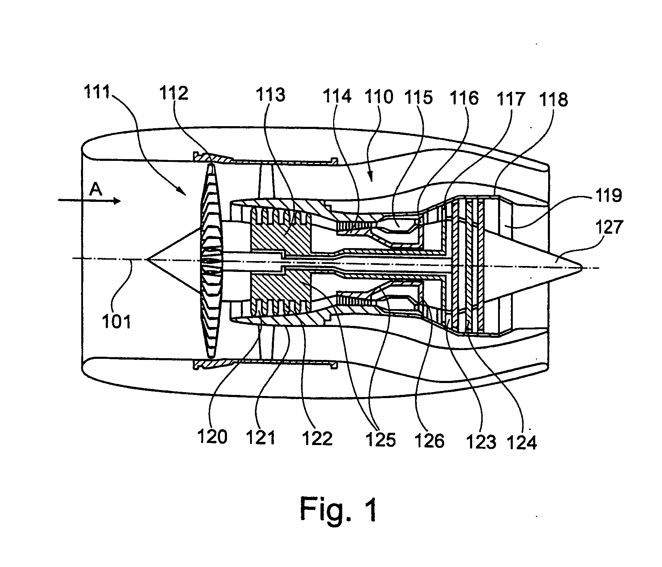

Das Gasturbinentriebwerk 110 gemäß Fig. 1 ist ein allgemein dargestelltes Beispiel einer Turbomaschine, bei der die Erfindung Anwendung finden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Triebwerksgehäuse 121 in einem ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 bzw. der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101.

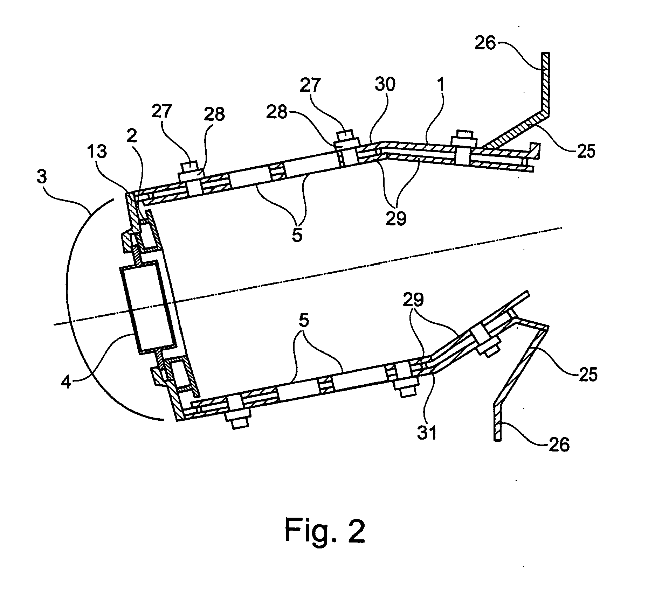

Die Fig. 2 zeigt in schematischer vergrößerter Darstellung eine Schnittansicht einer Gasturbinenbrennkammer 1 gemäß dem Stand der Technik. Die Brennkammer umfasst ein Hitzeschild 2 sowie einen Brennkammerkopf 3, die, ebenso wie eine Brennerdichtung 4 als separate Bauteile gefertigt sind. Weiterhin weist die Brennkammer 1 eine Kopfplatte 13 auf, welche ebenfalls als separates Bauteil hergestellt ist. An die Kopfplatte 13 schließen sich eine äußere Brennkammerwand 30 sowie eine innere Brennkammerwand 31 an. Die Brennkammerwände 30 und 31 sind als separate Teile aus geformtem Metallblech gefertigt und mit gebohrten Prallkühllöchern versehen. Die Aufhängung der Brennkammer 1 erfolgt mittels einer Brennkammeraufhängung 25 und Brennkammerflanschen 26, welche ebenfalls als separate Teile, üblicherweise als Schmiedeteile hergestellt sind und mit den Brennkammerwänden 30 und 31 verschweißt sind.

Der Brennkammerkopf 3, die Kopfplatte 13 und das Hitzeschild 2, sind, wie erwähnt, als separate Bauteile hergestellt, üblicherweise mittels eines Gussverfahrens. In nachfolgenden Verfahrensschritten ist es erforderlich, Kühllöcher auszubilden, insbesondere im Hitzeschild. Luftdurchtrittslöcher in der Kopfplatte 13 werden ebenfalls üblicherweise gebohrt.

Zur thermischen Isolierung der äußeren und der inneren Brennkammerwand 30, 31 werden Schindeln 29 verwendet, welche einzeln hergestellt werden und mit Effusionslöchern versehen sind. Die Effusionslöcher werden üblicherweise gebohrt, während die Schindeln 29 als Gussteile hergestellt werden. Die Schindeln 29 werden mittels Bolzen 27 und Muttern 28 mit der äußeren und der inneren Brennkammerwand 30, 31 verschraubt oder auf andere Weise befestigt. Es ergibt sich somit, dass ein sehr komplexer Aufbau aus einer Vielzahl von einzeln hergestellten Bauelementen vorliegt. Sowohl zu deren Herstellung als auch zur Endmontage der Brennkammer ist ein erheblicher Arbeitsaufwand erforderlich, der hohe Kosten mit sich bringt. Zudem addieren sich Maßungenauigkeiten der einzelnen Bauteile, so dass besondere zusätzliche Maßnahmen erforderlich sind, um präzise Dimensionierungen der Brennkammer zu realisieren.

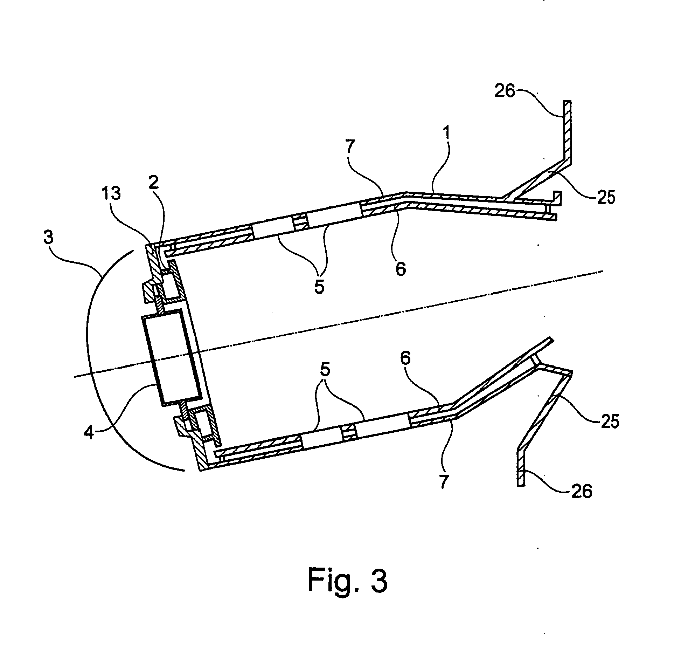

Die Fig. 3 zeigt ein erstes Ausführungsbeispiel einer erfindungsgemäßen Brennkammer 1, wobei gleiche Teile im Vergleich zu der Darstellung gemäß Fig. 2 mit gleichen Bezugsziffern versehen sind.

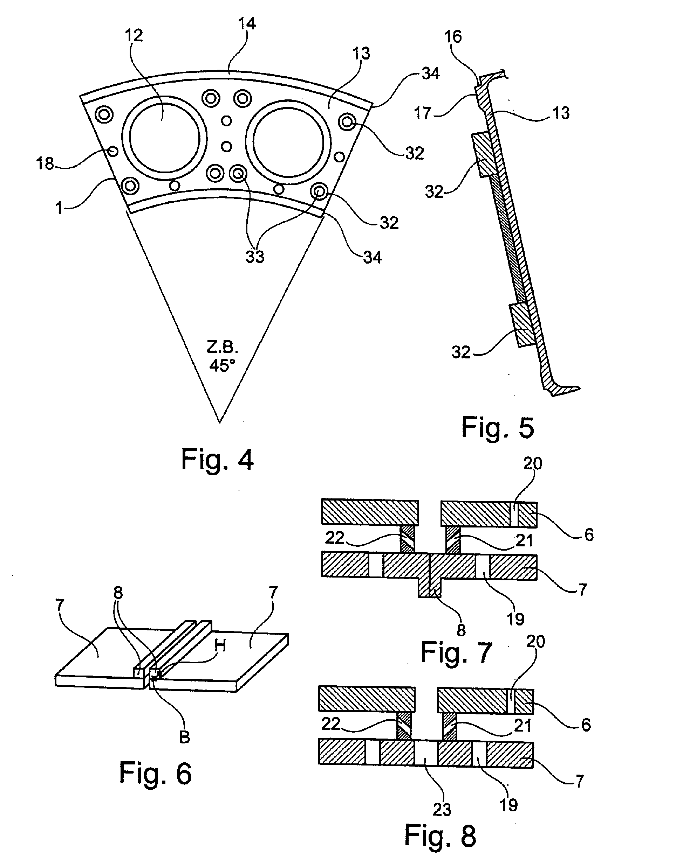

Die erfindungsgemäße Brennkammer 1 besteht aus einem einzigen Umfangssegment, welches in Form eines einen U-Querschnitt aufweisenden Vollrings ausgebildet ist. Alternativ hierzu ist es auch möglich, die Brennkammer in Form von Segmenten auszubilden, so wie dies in den Fig. 4 und 5 dargestellt ist. Die Brennkammersegmente werden nachfolgend zu einem Vollring gefügt, bevorzugterweise mittels eines Laserschweißverfahrens.

Die Brennkammer weist, wie erwähnt, einen U-förmigen Querschnitt auf, so wie dies in Fig. 3 gezeigt ist. Somit ist die Kopfplatte 13 einstückig mit einer inneren, heißen Brennkammerwand 6 sowie einer äußeren, kalten Brennkammerwand 7 verbunden. Die Brennkammerwände 6 und 7 weisen Zumischlöcher 5 auf. Durch die einstückige Ausgestaltung der voneinander beabstandeten, inneren heißen Brennkammerwand 6 und der äußeren, kalten Brennkammerwand 7 wird ein Zwischenraum gebildet, durch welchen Kühlluft durchgeleitet wird. Wie sich aus den Schnittansichten der Fig. 7 und 8 ergibt, ist die heiße Brennkammerwand 6 mit Effusionslöchern 20 versehen, während in der kalten Brennkammerwand 7 Prallkühllöcher 19 ausgebildet sind. Zur Beabstandung der beiden Brennkammerwände 6 und 7 dienen Verbindungsstege 21, welche mit Schweißnahtkühllöchern 22 versehen sind, um eine noch zu beschreibende Schweißnaht 23 zu kühlen. Die Schweißnahtkühllöcher 22 können auch abwechselnd nach Innen und Außen zeigen, um die Schweißnaht und den Schindelrand gleichermaßen zu kühlen.

An der jeweiligen kalten Brennkammerwand 7 sind Brennkammeraufhängungen 25 einstückig ausgebildet, welche einstückig in Brennkammerflansche 26 übergehen. Die Brennkammeraufhängung 25 und der Brennkammerflansch 26 kann entweder an der Innenseite oder der Außenseite oder beidseitig an der Brennkammer 1 vorgesehen sein.

Die Fig. 3 zeigt, dass der Brennkammerkopf 3, die Brennerdichtung 4 sowie das Hitzeschild 2 als separate Bauteile gefertigt und entsprechend montiert sind.

Als Variante kann die Brennkammer, wenn der U-förmige Querschnitt als Vollring hergestellt wird, mit einem integralen Kopfteil versehen sein, d.h. der Brennkammerkopf 3 und die Brennkammerwände 6 und/oder 7 sind einstückig ausgebildet und stellen keine separaten Teile mehr dar.

Erfindungsgemäß wird die Brennkammer 1 mittels eines DLD-Verfahrens gefertigt, so dass alle Prallkühllöcher 19, alle Effusionskühllöcher 20 sowie alle Zumischlöcher 5 während dieses Fertigungsverfahrens erzeugt werden. Gleiches gilt für nicht dargestellte Löcher für Zündkerzen, Instrumentierung oder sonstige Löcher zur Kühlung. Auch eine Belochung 18 der Kopfplatte 13 wird während des DLD-Herstellverfahrens mit erzeugt. Somit ist es erfindungsgemäß nicht erforderlich, zusätzliche Löcher zu bohren oder in anderer Weise herzustellen.

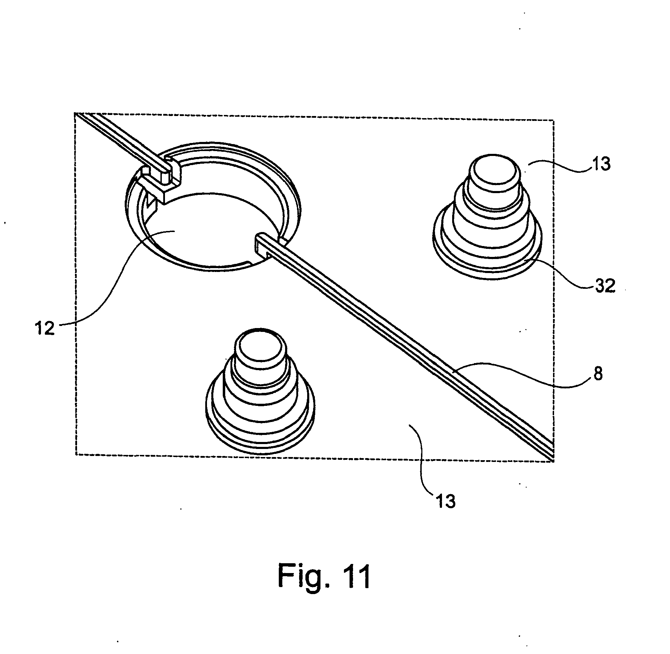

Bei einer segmentierten Ausgestaltung (s. Fig. 4 und 5) werden die einzelnen Segmente zu einem Vollring verschweißt, bevorzugterweise mittels eines Laserschweißverfahrens aber auch konventionelle Schweißverfahren sind denkbar. Das Bezugszeichen 34 zeigt Fügeflächen. Die Fig. 6 bis 8 zeigen hierzu, dass erfindungsgemäß Zusatzwerkstoffbereiche 8 ausgebildet sind, welche sich wulstartig am Fügebereich erstrecken und ebenfalls mittels des DLD-Verfahrens erzeugt werden. Die Zusatzwerkstoffbereiche 8 befinden sich beidseitig des Fügebereichs an der kalten Brennkammerwand 7, die Abmessungen können beispielsweise in der Breite und in der Höhe 0,4 mm bis 1,5 mm betragen. Die Zusatzwerkstoffbereiche erstrecken sich bevorzugterweise über die gesamte Länge der auszubildenden Schweißnaht, so wie dies in den Fig. 6 bis 8 gezeigt ist. Sie können jedoch auch überstehend ausgeführt sein, so wie dies in Fig. 11 gezeigt ist. Die Fig. 7 zeigt den Zustand vor dem Verschweißen, während die Fig. 8 den verschweißten Zustand mit der Schweißnaht 23 zeigt. Wie erwähnt, dienen die Schweißnahtkühllöcher 22 in den Verbindungsstegen 21 zur Kühlung der Schweißnaht 23. Sie können in anderer Ausrichtung auch zur Kühlung des Schindelrands dienen.

Fertigungstechnisch von Vorteil ist auch die lineare Ausgestaltung der Schweißnaht ohne Verzweigungen mit sich nur graduell (nicht sprunghaft) verändernden Dicken. Sich kreuzende Schweißnähte wie z.B. zwischen äußerer Brennkammerwand und Arm der Aufhängung können so gestaltet werden, dass die nötigen Ventilationsöffnungen auf der Trennlinie der Sektoren liegen und eine kontinuierliche Schweißnaht bis zu dem Punkt ermöglichen, wo durch Re-positionierung der Schweißspitze die Naht fortgeführt werden kann.

Um einen Einfall der Schweißnaht an Kanten wie z.B. Mischlöchern zu vermeiden, kann der Zusatzwerkstoffbereich über die eigentliche Werkstückgeometrie hinaus ausgeführt werden um einen unvermeidlichen Schweißansatzpunkt am fertigen Bauteil zu vermeiden. Dieser überstehende Zusatzwerkstoffbereich wird nach der Schweißoperation durch eine leichte Bearbeitung einschließlich aller Fehlerstellen entfernt.

Wie in Fig. 4 gezeigt, weist die Kopfplatte 13 Löcher 33 zur Durchführung von Schrauben oder Hitzeschildbolzen auf. Weiterhin sind Abstützelemente 32 für den Brennkammerkopf 3 vorgesehen. In der Kopfplatte 13 sind Löcher 12 für die Brennerdichtung 4 einstückig während des DLD-Herstellungsvorgangs ausgebildet. Aufgrund der DLD-Fertigung der einstückigen erfindungsgemäßen Brennkammer 1 ist es möglich, beliebige Loch- und Kanalformen sowie beliebige Größen der Löcher oder Kanäle zu realisieren, beispielsweise rund, elliptisch, rautenförmig. Weiterhin ist es möglich, die Löcher oder Kanäle in beliebiger Ausrichtung zu realisieren, beispielsweise senkrecht zur Wand, beliebig geneigt zur Wand, spiralförmig, sowie in unterschiedlichen Ausrichtungen zu den jeweiligen Oberflächen der Wand. Hierdurch ist eine optimale Kühlung möglich.

Bei den erfindungsgemäßen Ausführungsbeispielen ist vorgesehen, dass das Hitzeschild 2, der Brennkammerkopf 3 und die Brennerdichtung 4 als separate Teile mit beliebigen Fertigungsmethoden hergestellt werden können. Dabei ist sowohl eine DLD-Fertigung möglich, als auch die Verwendung eines Gussverfahrens oder eines Metallpulver-Spritzgussverfahrens (MIM, metal injection molding). Der Brennkammerkopf 3 kann als Vollring oder segmentiert ausgebildet sein, wobei die Segmentierung vom Brennkammerkopf 3 sich von der Segmentierung der Brennkammer 1 unterscheiden kann.

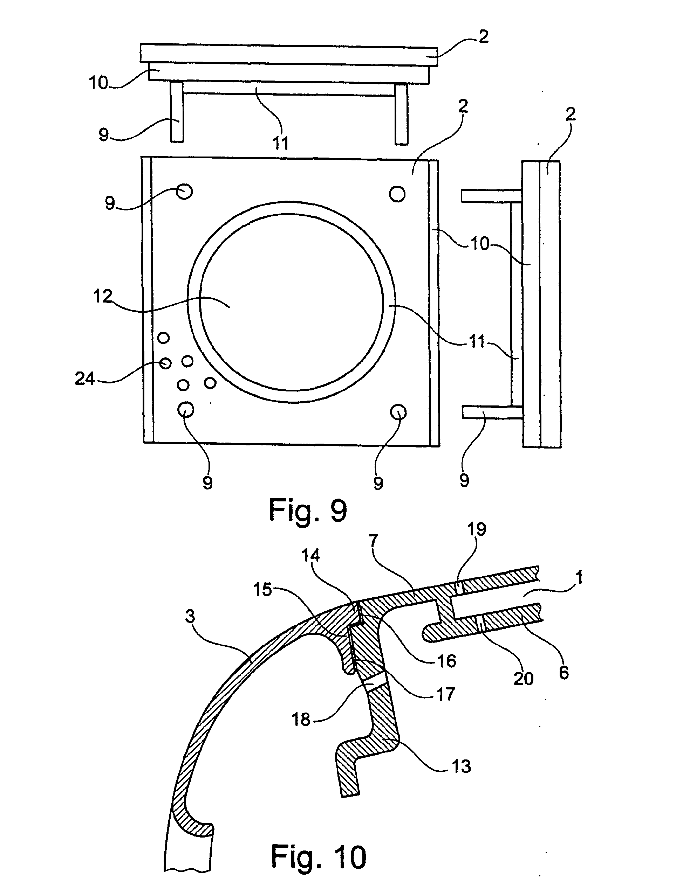

Wie in Fig. 9 gezeigt, weist das Hitzeschild 2 integrierte Bolzen 9 auf, die durch die Durchführung in der Kopfplatte 13 geführt werden. Somit kann das Hitzeschild 2 mit dem Brennkammerkopf 3 mit Hilfe einer Mutter verschraubt werden. Weitere Bauteile, wie z.B. eine Brennerdichtung 4, werden zwischen Hitzeschild 2, Brennkammerkopf 3 und Kopfplatte 13 angeordnet.

Es ist auch erfindungsgemäß möglich, dass das Hitzeschild als integraler Bestandteil des Brennkammerkopfes hergestellt wird. Dies ist in beiden Fällen, der segmentierten U-förmigen Brennkammer ohne integriertem Kopf sowie der Herstellung als Vollring, mit und ohne integralem Kopf (Fig 3, Brennkammerkopf 3 und Brennkammerwand 7), möglich. Die Befestigung der Brennerdichtung 4 erfolgt dann durch von vorne einzuführende separate Ringe.

Bei verschweißten Brennkammersegmenten weist das Hitzeschild 2 zusätzlich einen Überhang 10 an beiden Seiten zum benachbarten Hitzeschild 2 auf. Dieser Überhang 10 deckt die Schweißnaht ab, welche die dahinterliegenden Kopfplatten 13 verbindet. Weiterhin kann das Hitzeschild 2 auf seiner Rückseite eine erhabene Fläche in Form einer Abstützung 11 aufweisen, welche das Brennerloch 12 umgibt. Diese dient beim Verschrauben mit dem Brennerkopf 3 zur axialen Halterung und Lokalisierung der Brennerdichtung 4. In dem Hitzeschild 2 können beliebig viele, beliebig ausgebildete Kühllöcher 24 vorgesehen sein.

Die Fig. 10 zeigt ein Ausführungsbeispiel der Anbindung des Brennkammerkopfes 3 an die Brennkammer 1. Hierzu weist der Brennkammerkopf 3 eine Feder 14 sowie eine Abstützung 15 auf, welche zusammen mit einer Nut 16 der Brennkammer 1 zu einer exakten Positionierung des Brennkammerkopfes 3 beitragen. Die Abstützung 15 liegt gegen eine Stützfläche 17 an. Die Nut 16 und die Stützfläche 17 an der Kopfplatte 13 (Brennkammer/Brennkammersegment) können entweder unbearbeitet, wie aus dem DLD-Verfahrend resultierend, oder auf eine geeignete Oberflächengüte nachbearbeitet ausgeführt werden.

Durch die erfindungsgemäße Ausgestaltung ergibt sich eine erhebliche Reduzierung der Einzelteile. Weiterhin weist die erfindungsgemäße Brennkammer eine verbesserte Gesamttoleranz sowie weniger Bauabweichungen auf. Der Herstellprozess ist, im Vergleich zum Stand der Technik, weitaus schneller. Insgesamt ergeben sich deutlich reduzierte Kosten. Die einzelnen Bereiche der Brennkammer können, im Vergleich zum Stand der Technik, mit einer weitaus komplexeren und optimierteren Kühlung, insbesondere der Brennkammerwände, realisiert werden.

### Bezugszeichenliste:

- 1: Brennkammer
- 2: Hitzeschild
- 3: Brennkammerkopf
- 4: Brennerdichtung
- 5: Zumischloch
- 6: heiße, innere Brennkammerwand
- 7: kalte, äußere Brennkammerwand
- 8: Zusatzwerkstoffbereich
- 9: Bolzen
- 10: Überhang
- 11: Abstützung
- 12: Loch
- 13: Kopfplatte
- 14: Feder
- 15: Abstützung
- 16: Nut
- 17: Stützfläche
- 18: Belochung
- 19: Prallkühlloch
- 20: Effusionskühlloch
- 21: Verbindungssteg
- 22: Schweißnahtkühlloch
- 23: Schweißnaht
- 24: Kühlloch
- 25: Brennkammeraufhängung
- 26: Brennkammerflansch
- 27: Bolzen
- 28: Mutter
- 29: Schindel
- 30: äußere Brennkammerwand
- 31: innere Brennkammerwand
- 32: Abstützelement
- 33: Loch
- 34: Fügefläche
- 101: Triebwerksmittelachse
- 110: Gasturbinentriebwerk / Kerntriebwerk
- 111: Lufteinlass
- 112: Fan
- 113: Mitteldruckkompressor (Verdichter)
- 114: Hochdruckkompressor
- 115: Brennkammer
- 116: Hochdruckturbine
- 117: Mitteldruckturbine
- 118: Niederdruckturbine
- 119: Abgasdüse
- 120: Leitschaufeln
- 121: Triebwerksgehäuse
- 122: Kompressorlaufschaufeln
- 123: Leitschaufeln
- 124: Turbinenschaufeln
- 125: Kompressortrommel oder -scheibe
- 126: Turbinenrotornabe
- 127: Auslasskonus

## Patentansprüche

1. Gasturbinenbrennkammer mit einer Kopfplatte (13) sowie mit einer äußeren (7) und einer inneren (6) Brennkammerwand, **dadurch gekennzeichnet, dass** die Brennkammer einstückig mittels eines Laserauftragsschmelzverfahrens ausgebildet ist.

2. Gasturbinenbrennkammer mit einer Kopfplatte (13) sowie mit einer äußeren (7) und einer inneren (6) Brennkammerwand, **dadurch gekennzeichnet, dass** die Brennkammer aus einstückig mittels eines Laserauftragsschmelzverfahrens hergestellten, miteinander verschweißten Segmenten ausgebildet ist.

3. Gasturbinenbrennkammer nach Anspruch 1 oder 2, **dadurch gekennzeichnet, dass** diese einen U-förmigen Querschnitt aufweist.

4. Gasturbinenbrennkammer nach einem der Ansprüche 1 bis 3, **dadurch gekennzeichnet, dass** diese einstückig mit zumindest einem Brennkammerflansch (26) und/oder einer Brennkammeraufhängung (25) ausgebildet ist.

5. Gasturbinenbrennkammer nach einem der Ansprüche 2 bis 4, **dadurch gekennzeichnet, dass** an Fügebereichen der Segmente stegartige Zusatzwerkstoffbereiche (8) ausgebildet sind.

6. Gasturbinenbrennkammer nach einem der Ansprüche 1 bis 5, **dadurch gekennzeichnet, dass** Kühlluftlöcher (19, 20), Löcher (33) für Befestigungselemente, Zumischlöcher (5), Löcher für Zündkerzen und/oder Löcher für Sensoren durch das Laserauftragsschmelzverfahren hergestellt sind.

7. Gasturbinenbrennkammer nach einem der Ansprüche 1 bis 6, **dadurch gekennzeichnet, dass** ein Brennkammerkopf (3) segmentiert oder als Vollring ausgebildet ist.

8. Gasturbinenbrennkammer nach einem der Ansprüche 1 bis 7, **dadurch gekennzeichnet, dass** die Kopfplatte (13) mit formschlüssigen Positioniermitteln (16, 17) für einen Brennkammerkopf (3) versehen ist.

9. Verfahren zur Herstellung einer Brennkammer einer Gasturbine, bei welchem eine Kopfplatte (13) sowie eine äußere (7) und eine innere (6) Brennkammerwand einstückig mittels eines Laserauftragsschmelzverfahrens hergestellt werden.

10. Verfahren nach Anspruch 9, **dadurch gekennzeichnet, dass** die Brennkammer als Vollring oder als miteinander zu verschweißende Segmente hergestellt wird.

## Claims

1. Gas-turbine combustion chamber having a head plate (13) as well as an outer (7) and an inner (6) combustion chamber wall, **characterized in that** the combustion chamber is designed in one piece by means of a direct laser deposition process.

2. Gas-turbine combustion chamber having a head plate (13) as well as an outer (7) and an inner (6) combustion chamber wall, **characterized in that** the combustion chamber is assembled from segments which are welded to one another and manufactured in one piece by means of a direct laser deposition process.

3. Gas-turbine combustion chamber in accordance with Claim 1 or 2, **characterized in that** this combustion chamber has a U-shaped cross-section.

4. Gas-turbine combustion chamber in accordance with one of the Claims 1 to 3, **characterized in that** this combustion chamber is designed in one piece with at least one combustion chamber flange (26) and/ or one combustion chamber suspension (25).

5. Gas-turbine combustion chamber in accordance with one of the Claims 2 to 4, **characterized in that** web-like filler material areas (8) are provided at the joining areas of the segments.

6. Gas-turbine combustion chamber in accordance with one of the Claims 1 to 5, **characterized in that** cooling air holes (19, 20), holes (33) for fastening elements, admixing holes (5), holes for igniter plugs and/ or holes for sensors are manufactured by means of the direct laser deposition process.

7. Gas-turbine combustion chamber in accordance with one of the Claims 1 to 6, **characterized in that** a combustion chamber head (3) is designed in segmented form or as a full ring.

8. Gas-turbine combustion chamber in accordance with one of the Claims 1 to 7, **characterized in that** the head plate (13) is provided with positive-fitting positioning means (16, 17) for a combustion chamber head (3).

9. Method for manufacturing a combustion chamber of a gas turbine, where a head plate (13) as well as an outer (7) and an inner (6) combustion chamber wall are manufactured in one piece by means of a direct laser deposition process.

10. Method in accordance with Claim 9, **characterized in that** the combustion chamber is manufactured as a full ring or in the form of segments to be welded to one another.

## Revendications

1. Chambre de combustion de turbine à gaz comprenant une plaque frontale (13) ainsi qu'une paroi de chambre de combustion extérieure (7) et une paroi de chambre de combustion intérieure (6), **caractérisée en ce que** la chambre de combustion est formée en une seule pièce au moyen d'une méthode de déposition directe par laser.

2. Chambre de combustion de turbine à gaz comprenant une plaque frontale (13) ainsi qu'une paroi de chambre de combustion extérieure (7) et une paroi de chambre de combustion intérieure (6), **caractérisée en ce que** la chambre de combustion est formée par des segments soudés entre eux et fabriqués au moyen d'une méthode de déposition directe par laser.

3. Chambre de combustion de turbine à gaz selon la revendication n° 1 ou n° 2, **caractérisée en ce qu'**elle présente une section transversale en forme d'U.

4. Chambre de combustion de turbine à gaz selon une des revendications n° 1 à n° 3, **caractérisée en ce que** celle-ci est formée en une seule pièce avec au moins une bride de chambre de combustion (26) et/ ou une suspension de chambre de combustion (25).

5. Chambre de combustion de turbine à gaz selon une des revendications n° 2 à n° 4, **caractérisée en ce que** des zones de produit d'apport (8) à la manière de nervures sont formées aux zones d'assemblage des segments.

6. Chambre de combustion de turbine à gaz selon une des revendications n° 1 à n° 5, **caractérisée en ce que** des orifices pour l'air de refroidissement (19, 20), des orifices (33) pour éléments de fixation, des orifices de mixtion (5), des orifices pour bougies d'allumage et/ ou des orifices pour capteurs sont façonnés par la méthode de déposition directe par laser.

7. Chambre de combustion de turbine à gaz selon une des revendications n° 1 à n° 6, **caractérisée en ce qu'**une tête de chambre de combustion (3) est formée de manière segmentée ou en tant qu'anneau monobloc.

8. Chambre de combustion de turbine à gaz selon une des revendications n° 1 à n° 7, **caractérisée en ce que** la plaque frontale (13) est munie de moyens de positionnement (16, 17) par complémentarité de forme pour une tête de chambre de combustion (3).

9. Procédé de fabrication d'une chambre de combustion d'une turbine à gaz, dans lequel une plaque frontale (13) ainsi qu'une paroi de chambre de combustion extérieure (7) et une paroi de chambre de combustion intérieure (6) sont fabriquées en une seule pièce au moyen d'une méthode de déposition directe par laser.

10. Procédé selon la revendication n° 9, **caractérisé en ce que** la chambre de combustion est fabriquée en tant qu'anneau monobloc ou en tant que segments à souder entre eux.
